# EUROPÄISCHE PATENTSCHRIFT

(11) **EP 0 460 489 B1**
(45) Veröffentlichungstag und Bekanntmachung des Hinweises auf die Patenterteilung: **02.03.1994**
(21) Anmeldenummer: 91108583.5
(22) Anmeldetag: 27.05.1991
(51) Int. Cl.: B62D 25/00

(54) **Verfahren zur Befestigung eines aus Kunststoff bestehenden Verschlussdeckels in einer Trägeröffnung**
Method for attaching a plastics closure cap to an opening
Méthode pour la fixation d'un bouchon en matière synthétique dans une ouverture

(30) Priorität: 08.06.1990 DE 4018425
(43) Veröffentlichungstag der Anmeldung: 11.12.1991
(73) Patentinhaber: TRW United-Carr GmbH & Co. KG, D-67677 Enkenbach-Alsenborn (DE)
(72) Erfinder: Kraus, Willibald, W-6718 Grünstadt (DE)
(74) Vertreter: Schieschke, Klaus, Dipl.-Ing.

(56) Entgegenhaltungen:
- WO-A-83/02102
- DE-A- 2 940 757
- DE-A- 3 011 448
- DE-A- 3 441 193
- DE-A- 3 512 582
- GB-A- 1 354 973
- GB-A- 1 388 491
- US-A- 3 876 102

## Beschreibung

Die Erfindung bezieht sich auch auf ein Verfahren zur Befestigung eines aus Kunststoff bestehenden Verschlußdeckels in einer Öffnung des Trägers, insbesondere einer Kraftfahrzeug-Karosserie, und verschiedener Ausgestaltungsmöglichkeiten eines derartigen Verschlußdeckels.

Als Stand der Technik sind bereits Verschlußdeckel bekannt, welche aus Kunststoff bestehen und oberseitig sowie unterseitig jeweils eine Dichtlippe besitzen, die die benachbarten Flächen im Bereich einer Trägeröffnung beaufschlagen. (DE-A-35 12 582, DE-A-30 11 448, GB-A-1354973). Bei allen derartigen bekannten Verschlußdeckeln besteht jedoch der Nachteil eines unbeabsichtigten Lösens aus der Trägeröffnung, so daß stets durch zusätzliche Einrichtungen dafür Sorge getragen werden muß, den entsprechenden Verschlußdeckel unlösbar innerhalb einer Trägeröffnung zu befestigen. Aus dem Dokument WO 83/02102 ist ein aus Elastomer oder thermoplastischem Stoff hergestellter Verschlußdeckel bekannt, der unter Temperatureinwirkung expandiert und damit den Spielraum zwischen der Trägeröffnung und dem Verschlußdeckel schließt.

Demgegenüber liegt der vorliegenden Erfindung die Aufgabe zugrunde, ein Verfahren und einen entsprechend gestalteten Verschlußdeckel so zu entwickeln, daß eine funktionssichere Befestigung in einer Trägeröffnung, beispielsweise einer Kraftfahrzeug-Karosserie gewährleistet ist.

Diese Aufgabe wird erfindungsgemäß durch die Merkmalskombination des Anspruchs 1 gelöst, wobei mindestens ein Hohlraum innerhalb des Verschlußdeckels ausgebildet ist und mit einem Medium gefüllt wird, welches nach der Montage des Verschlußdeckels in der Trägeröffnung sich innerhalb der Trägeröffnung befindet und unter Temperatureinwirkung expandiert und damit Bereiche des Verschlußdeckels gegen benachbarte Bereiche der Trägeröffnung drückt. Hierdurch ergibt sich der Vorteil, daß der aus zwei Materialien bestehende Verschlußdeckel innerhalb einer Trägeröffnung angebracht wird; das Medium innerhalb des Hohlraumes des Verschlußdeckels dehnt sich bei Temperaturbeeinflussung aus, womit im eingebauten Zustand sich die entsprechenden Bereiche des Verschlußdeckels an den Innenrand des Trägers bzw. an ein Kragenloch andrücken und damit eine absolute Abdichtung gewährleistet ist. Hierbei spielt es keine Rolle, ob die entsprechenden Trägeröffnungen rund, oval oder eckig ausgebildet sind.

In den Hohlraum des Verschlußdeckels wird also eine an sich bekannte, unter Temperatureinwirkung sich ausdehnende Masse beispielsweise im Zweikomponenten-Verfahren eingespritzt, (siehe zum Beispiel das Dokument DE-A-2940757) welche sich nach einem weiteren Merkmal der Erfindung in einem Temperaturbereich z.B. bis ca. 200°C unter Wärmebehandlung ausdehnen kann. Es ergibt sich damit einmal eine einfache Montage, wodurch Aufquellen der entsprechenden, in dem Hohlraum befindlichen Masse der entsprechenden, in dem Hohlraum befindlichen Masse der entsprechende Bereich des Verschlußdeckels an die Innenwand der Trägeröffnung so stark angepreßt wird, daß ein Festsitz, Wasserdichtigkeit und evtl. sogar auch Gasdichtigkeit gewährleistet ist.

In weiterer Ausgestaltung der Erfindung kann der Hohlraum innerhalb des Verschlußdeckels symmetrisch im Verschlußdeckel angeordnet sein. Hierbei kann sich entweder der Hohlraum durch den gesamten Verschlußdeckel erstrecken oder in dem Verschlußdeckel als Ring ausgebildet sein.

Nach einem weiteren Merkmal der Erfindung kann der Hohlraum über mindestens eine Öffnung mit der Ober- und/oder der Unterseite verbunden sein, so daß das unter Wärmeausdehnung aufquellende Material auf einfache Weise eingebracht werden kann.

In weiterer Ausgestaltung der Erfindung besteht die Möglichkeit, daß der Verschlußdeckel entweder einstückig oder zweiteilig ausgebildet ist, wobei dann die beiden Teile des Verschlußdeckels beispielsweise durch ein Klebeverfahren untrennbar miteinander verbunden werden und den entsprechenden Hohlraum sicher abschließen.

Die Erfindung wird nachfolgend anhand von der Zeichnung dargestellten Ausführungsbeispielen näher beschrieben. In den Zeichnungen zeigen

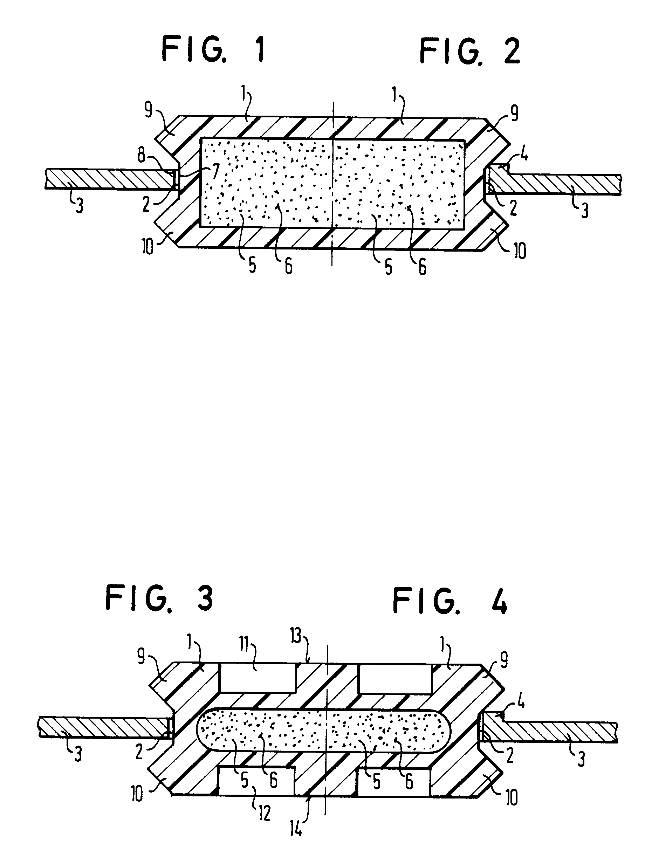

Fig. 1 bis 10 verschiedene Ausführungsformen eines erfindungsgemäßen Verschlußdeckels, jeweils in Seitenansicht, im Halbschnitt.

Der in Fig. 1 dargestellte Verschlußdeckel 1 dient dazu, in eine Öffnung 2 eines Trägers 3, beispielsweise einer Kraftfahrzeug-Karosserie, eingesetzt zu werden. Hierbei soll der umlaufende Ringbereich 7 des Verschlußdeckels 1 den benachbarten Bereich 8 der Trägeröffnung 2 so beaufschlagen, daß eine sichere Befestigung des Verschlußdeckels 1 in der Trägeröffnung 2 gewährleistet ist, und zwar möglichst wasserdicht oder sogar auch gasdicht.

Zu diesem Zweck weist der Verschlußdeckel 1 im Inneren einen Hohlraum 5 auf, welcher mit einem Medium, beispielsweise einer Kunststoffmasse gefüllt ist. Dieser Hohlraum 5 des Verschlußdekkels 1 wird in einem Spritzverfahren, beispielsweise Gasinnendruckverfahren, hergestellt. Danach kann über eine an sich bekannte Injektion die entsprechende Kunststoffmasse 6 in den Hohlraum eingefüllt werden.

Nach Einsetzen des Verschlußdeckels 1 mit dem in dem Hohlraum 5 befindlichen Medium 6 wird die gesamte Einheit einer Wärmebehandlung unterzogen, wobei das Medium 6 sich in einem Temperaturbereich von z.B.ca. +90 °C bis 180 °C ausdehnt. Damit sitzt der Verschlußdeckel 1 durch Aufquellen der Masse 6 sicher in der Trägeröffnung 2. Hierbei weist der Verschlußdeckel 1 im oberen und unteren Bereich jeweils noch Dichtlippen 9 und 10 auf, welche umlaufend ausgebildet sind und sich nach Durchführung der Wärmebehandlung an benachbarte Bereiche der Trägeröffnung anlegen.

Bei der Ausführungsform nach Fig. 2 ist der Verschlußdeckel 1 identisch ausgebildet, dient jedoch zum Verschließen einer Trägeröffnung 2, welche mit einem umlaufenden Kragen 4 versehen ist.

Bei der Ausführungsform nach Fig. 3 ist der Verschlußdeckel 1 insofern anders gestaltet, als auf der Oberseite 13 und der Unterseite 14 jeweils eine etwa ringförmige Aussparung 11 bzw. 12 vorhanden ist. Wiederung findet ein Hohlraum 5 Anwendung, welcher mit einer unter Temperatureinwirkung sich ausdehnenden Kunststoffmasse 6 gefüllt ist.

Bei der Ausführungsform nach Fig. 4 ist wiederum die Möglichkeit einer Abdichtung der Öffnung 2 eines Trägers 3 gegeben, welcher mit einem umlaufenden Kragen 4 versehen ist.

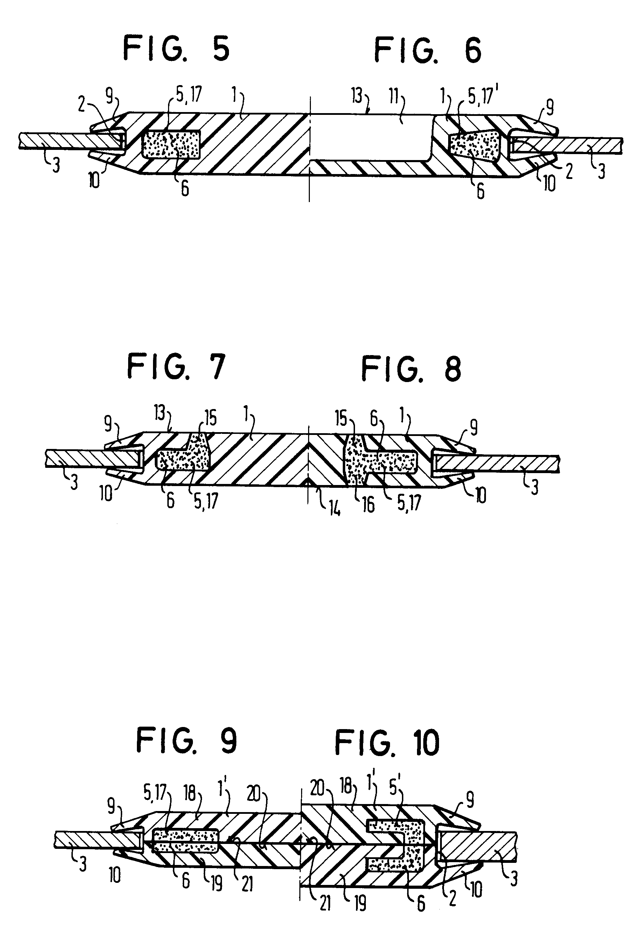

Während sich bei den Ausführungsformen nach Fig. 1 bis 4 der Hohlraum 5 durch den ganzen Verschlußdeckel 1 erstreckt, ist bei der Ausführungsform nach fig. 5 der Hohlraum als Ring 17 ausgebildet und wiederum mit der Kunststoffmasse 6 gefüllt.

Hierbei besteht nach Fig. 6 die Möglichkeit, auf der Oberseite 13 den Verschlußdeckel 1 mit einer napfförmigen Aussparung 11 zu versehen. Darüber hinaus kann der ringförmige Hohlraum 5 bzw. 17' jede beliebige geometrische Form haben.

Wiederum weist der Verschlußdeckel 1 nach Fig. 1 und 6 im oberen und unteren Bereich umlaufende Dichtlippen 9 und 10 auf.

Bei der Ausführungsform nach Fig. 7 ist der Hohlraum 5 über mindestens eine Öffnung 15 mit der Oberseite 13 des Verschlußdekkels 1 verbunden. Damit läßt sich die Masse 6 auf einfache Weise über die Öffnung 15 in den als Ring 17 ausgebildeten Hohlraum 5 des Verschlußdeckels 1 einbringen.

Nach Fig. 8 besteht auch die Möglichkeit, daß mindestens eine Öffnung 15 bzw. 16 von der Oberseite 13 bzw. der Unterseite 14 zu dem Hohlraum 5 führt, welcher wiederum als Ring ausgebildet ist. Auch hierdurch läßt sich die entsprechende Kunststoffmasse auf eine einfache Weise in den Hohlraum 5 einbringen, wobei diese Masse 6 jedoch eine derartige Konsistenz aufweisen muß, daß nicht ein unerwünschtes Herausgleiten der Kunststoffmasse aus dem Verschlußdeckel 1 stattfinden kann.

Allen vorgenannten Bauformen des Verschlußdeckels 1 ist gemeinsam, daß dieser Verschlußdeckel einstückig ausgebildet ist und im Innern den beliebig gestalteten Hohlraum 5 aufweist.

Nach den Ausführungsformen Fig. 9 und Fig. 10 kann der Verschlußdeckel 1'zweiteilig ausgebildet sein mit einem in den unlösbar zu verbindenden Teilen 18, 19 eingearbeiteten Hohlraum 5. Diese beiden Teile 18 und 19 werden an den angrenzenden Flächen 20, 21 beispielsweise durch Kleben miteinander verbunden und bilden somit nach dieser Verbindung einen einstückigen Verschlußdeckel 1'. Wiederum kann die entsprechende Masse 6 in den nach Fig. 9 rechteckig ausgebildeten Hohlraum 5 eingebracht werden.

Es besteht auch die Möglichkeit, die beiden Halbschalenteile durch ein Scharnier miteinander zu verbinden und z.B. zum Verkleben zusammenzuklappen.

Bei der Ausführungsform nach Fig. 10 ist der Hohlraum 5'im Querschnitt U-förmig ausgebildet.

Die beiden Teil 18, 19 des Verschlußdeckels weisen wiederum umlaufende Dichtlippen 9 bzw. 10 auf.

Der zweiteilig ausgebildete Verschlußdeckel 1' kann auch nach einem nicht näher dargestellten Ausführungsbeispiel im Bereich seiner Längsachse in zwei halbkreisförmige Teile aufgeteilt sein, welche z.B. durch ein Scharnier miteinander verbunden sind und z.B. durch Verkleben benachbarter Flächen zu einer Einheit zusammengefügt werden, welche den Hohlraum enthält.

Durch die besondere Gestaltung des Verschlußdeckels 1 bzw. 1' mit einem in dem Hohlraum 5 bzw. 5' eingebrachten Medium 6, das sich unter Temperatureinwirkung z.B. bis 200 oC und darüber ausdehnt, ist auf einfache Weise eine funktionssichere Befestigung des Verschlußdeckels in einer Trägeröffnung gewährleistet, wobei ein Festsitz und Wasserdichtigkeit gegeben ist und sogar auch Gasdichtigkeit erzielt werden kann.

## Patentansprüche

1. Verfahren zur Befestigung eines aus Kunststoff bestehenden Verschlußdeckels (1, 1') in einer Öffnung (2) eines Trägers, insbesondere einer Kraftfahrzeug-Karosserie, wobei mindestens ein Hohlraum (5, 5') innerhalb des Verschlußdeckels (1, 1') ausgebildet ist und mit einem Medium (6) gefüllt wird, welches nach der Montage des Verschlußdekkels (1, 1') in der Trägeröffnung (2) sich innerhalb der Trägeröffnung befindet und unter Temperatureinwirkung expandiert und damit Bereiche (7) des Verschlußdeckels (1, 1') gegen benachbarten Bereich (8) der Trägeröffnung (2) drückt.

2. Verfahren nach Anspruch 1, dadurch gekennzeichnet, daß als Medium (6) eine Kunststoffmasse verwendet wird, welche sich in einem Temperaturbereich bis ca. 200°C unter Wärmebehandlung ausdehnt.

3. Verschlußdeckel zur Durchführung des Verfahrens nach Anspruch 1 und 2, dadurch gekennzeichnet, daß der Hohlraum (5, 5') symmetrisch im Verschlußdeckel angeordnet ist.

4. Verschlußdeckel nach Anspruch 3, dadurch gekennzeichnet, daß der Hohlraum (5, 5') sich durch den gesamten Verschlußdeckel (1, 1') erstreckt.

5. Verschlußdeckel nach Anspruch 3, dadurch gekennzeichnet, daß der Hohlraum (5, 5') in dem Verschlußdeckel (1, 1') als Ring (17, 17') ausgebildet ist.

6. Verschlußdeckel nach Anspruch 4 oder 5, dadurch gekennzeichnet, daß der Verschlußdeckel (1, 1') einseitig oder beidseitig im Bereich der Ober- oder Unterseite (13, 14) mit mindestens einer Aussparung (11, 12) versehen ist.

7. Verschlußdeckel nach einem der vorhergenannten Ansprüche, dadurch gekennzeichnet, daß der Hohlraum (5) über mindestens eine Öffnung (15, 16) mit der Ober- und/oder der Unterseite (13, 14) verbunden ist.

8. Verschlußdeckel nach einem der vorhergenannten Ansprüche, dadurch gekennzeichnet, daß der Verschlußdeckel (1) einstückig ausgebildet ist und im Inneren den Hohlraum (5) aufweist.

9. Verschlußdeckel nach einme der Ansprüche 3 bis 7, dadurch gekennzeichnet, daß der Verschlußdeckel (1') zweiteilig ausgebildet ist, mit einem an die unlösbar zu verbindenden Flächen (20, 21) angrenzenden Hohlraum (5').

10. Verschlußdeckel nach Anspruch 1, dadurch gekennzeichnet, daß der durch beide Teile (18, 19) des Verschlußdeckels (1) gebildete Hohlraum (5') im Querschnitt U-förmig ausgebildet ist.

11. Verschlußdeckel nach einem der vorhergenannten Ansprüche, dadurch gekennzeichnet, daß der Verschlußdeckel (1, 1') im Bereich der Trägeröffnung (2) ober- und/oder unterseitig mindestens eine umlaufende Dichtlippe (9, 10) aufweist.

## Claims

1. Method for fastening a closure cover (1, 1') made of plastic in an opening (2) of a support, in particular a motor vehicle body, at least one cavity (5, 5') being formed within the closure cover (1, 1') and filled with a medium (6) which, after fitting of the closure cover (1, 1') in the support opening (2), is located within the support opening and expands under the effect of temperature and thereby presses regions (7) of the closure cover (1, 1') against an adjacent region (8) of the support opening (2).

2. Method according to Claim 1, characterized in that a plastics composition is used as the medium (6), which plastics composition expands under heat treatment in a temperature range up to approximately 200°C.

3. Closure cover for carrying out the method according to Claims 1 and 2, characterized in that the cavity (5, 5') is arranged symmetrically in the closure cover.

4. Closure cover according to Claim 3, characterized in that the cavity (5, 5') extends through the entire closure cover (1, 1').

5. Closure cover according to Claim 3, characterized in that the cavity (5, 5') is designed as a ring (17, 17') in the closure cover (1, 1').

6. Closure cover according to Claim 4 or 5, characterized in that the closure cover (1, 1') is provided with at least one recess (11, 12) on one side or both sides, in the region of the top side or bottom side (13, 14).

7. Closure cover according to one of the aforementioned claims, characterized in that the cavity (5) is connected via at least one opening (15, 16) to the top side and/or the bottom side (13, 14).

8. Closure cover according to one of the aforementioned claims, characterized in that the closure cover (1) is designed in one piece and has the cavity (5) in the interior.

9. Closure cover according to one of Claims 3 to 7, characterized in that the closure cover (1') is designed in two parts with a cavity (5') adjoining the surfaces (20, 21) to be unreleasably joined.

10. Closure cover according to Claim 1, characterized in that the cavity (5') formed by both parts (18, 19) of the closure cover (1) is U-shaped in cross-section.

11. Closure cover according to one of the aforementioned claims, characterized in that the closure cover (1, 1') has at least one surrounding sealing lip (9, 10) on its top side and/or bottom side, in the region of the support opening (2).

## Revendications

1. Procédé pour la fixation d'un bouchon en matière plastique (1, 1') dans une ouverture (2) d'un support, notamment d'une carrosserie de véhicule automobile, au moins un espace creux (5, 5') étant formé à l'intérieur du bouchon (1, 1') et rempli d'un agent (6) qui après le montage du bouchon (1, 1') dans l'ouverture du support (2) se trouve à l'intérieur de l'ouverture du support et sous l'effet de la température se dilate et comprime ainsi les zones (7) du bouchon (1, 1') contre la zone avoisinante (8) de l'ouverture du support (2).

2. Procédé selon la revendication 1, caractérisé en ce qu'en tant qu'agent (6) on utilise une pâte de plastique qui se dilate sous l'effet thermique dans une plage de température jusqu'à 200°C.

3. Bouchon pour la réalisation du procédé selon les revendications 1 et 2, caractérisé en ce que l'espace creux (5, 5') est disposé de façon symétrique dans le bouchon.

4. Bouchon selon la revendication 3, caractérisé en ce que l'espace creux (5, 5') s'étend à travers la totalité du bouchon (1, 1').

5. Bouchon selon la revendication 3, caractérisé en ce que l'espace creux (5, 5') est formé dans le bouchon (1, 1') sous forme d'anneau (17, 17').

6. Bouchon selon la revendication 4 ou 5, caractérisé en ce que le bouchon (1, 1') est muni sur un côté ou sur les deux côtés au niveau du côté supérieur ou inférieur (13, 14) d'au moins un évidement (11, 12).

7. Bouchon selon l'une des revendications précédentes, caractérisé en ce que l'espace creux (5) est raccordé au moins par une ouverture (15, 16) au côté supérieur et/ou au côté inférieur (13, 14).

8. Bouchon selon l'une des revendications précédentes, caractérisé en ce que le bouchon (1) est formé d'un seul tenant et comporte à l'intérieur l'espace creux (5).

9. Bouchon selon l'une des revendications 3 à 7, caractérisé en ce que le bouchon (1') est formé en deux parties avec un espace creux (5') limitrophe de surface (20, 21) à raccorder de façon indesserrable.

10. Bouchon selon la revendication 1, caractérisé en ce que l'espace creux (5') formé par les deux parties (18, 19) du bouchon (1) est conçu en forme de U en section transversale.

11. Bouchon selon l'une des revendications précédentes, caractérisé en ce que le bouchon (1, 1') au niveau de l'ouverture de support (2) comporte au moins une lèvre d'étanchéité périphérique (9, 10) au niveau de l'ouverture de support (2) sur le côté supérieur et/ou sur le côté inférieur.
